# EUROPEAN PATENT APPLICATION

(11) **EP 4 806 705 A1**
(43) Date of publication of application: **16.09.2026**
(21) Application number: 26160678.4
(22) Date of filing: 25.02.2026
(51) Int. Cl.: B60L 1/00, B60L 1/02, B60L 50/60, B60R 16/023

(54) **HIGH-VOLTAGE SYSTEM OF ELECTRIC VEHICLE, AND ELECTRIC VEHICLE**

(30) Priority: 10.03.2025 CN 202520411156 U
(71) Applicant: Volkswagen Group (China) Technology Company Limited, Hefei, Anhui 2390091 (CN)
(72) Inventor: GUO, Kai, HEFEI, 2390091 (CN); ZHANG, Ruolan, HEFEI, 2390091 (CN); ZHANG, Junfeng, HEFEI, 2390091 (CN); ARNAOUT, Samy, HEFEI, 2390091 (CN)
(74) Representative: Zimmermann & Partner Patentanwälte mbB

(57) **Abstract**

The present application provides a high-voltage system of an electric vehicle, and an electric vehicle. The high-voltage system includes: a high-voltage battery (20), a motor (30) and a high-voltage control module (10) disposed in an integration area, the high-voltage control module (10) is provided with a unified external battery interface and a unified external motor interface; the battery interface is configured to connect to the high-voltage battery (20) and the motor interface is configured to connect to the motor (30). In this way, integration can be enhanced, connection circuitry can be simplified, and costs can be reduced.

## Description

### FIELD

The present application relates to the technical field of vehicles, and in particular, to a high-voltage system of an electric vehicle, and an electric vehicle.

### BACKGROUND

Electric vehicles contain a plurality of high-voltage and low-voltage components. High-voltage components include a high-voltage direct current to direct current (HVDCDC) converter, a power distribution unit (PDU), an on-board charger (OBC), etc. In the fields of the electric vehicles, high voltage typically ranges from 300 volts to 1,000 volts or even higher, while low voltage generally refers to voltages below 48 volts.

Currently, the high-voltage components in the electric vehicles are arranged independently, and each high-voltage component is equipped with independent connection design, such as dedicated high-voltage distribution wiring harness, high-voltage interface, cooling channel, high-voltage sampling, high-voltage driving, isolation, etc. especially for Vehicle Segment A (i.e., compact-class vehicles), resulting in excessive and redundant wiring, low integration and cost waste.

### SUMMARY

The present application provides a high-voltage system of an electric vehicle, and an electric vehicle, so as to address the above technical problems in the prior arts.

According to a first aspect of the present application, there is provided a high-voltage system of an electric vehicle, including: a high-voltage battery, a motor and a high-voltage control module disposed in an integration area, wherein the high-voltage control module is provided with a unified external battery interface and a unified external motor interface; the battery interface is configured to connect to the high-voltage battery and the motor interface is configured to connect to the motor.

In some implementations, the high-voltage control module includes: an integrated control chip, a high-voltage component and a power module disposed in the integration area;
the high-voltage component is connected to the power module, the battery interface and the integrated control chip, the high-voltage component is further connected to the high-voltage battery through the battery interface, and the high-voltage component receives a control instruction sent by the integrated control chip;
the power module is connected to the motor interface and the integrated control chip, is further connected to the motor by the motor interface, and receives a control instruction sent by the integrated control chip.

In some implementations, the integrated control chip includes a high-voltage component control unit and a power module control unit; the high-voltage component control unit is connected to the high-voltage component, the power module control unit is connected to the power module.

In some implementations, the high-voltage component includes a high-voltage direct current to direct current converter, and further comprises at least one of a power distribution unit, a compressor, or a heater; the high-voltage component control unit includes a high-voltage direct current to direct current converter control unit and correspondingly comprises at least one of a power distribution control unit, a compressor control unit or a heater control unit;
the high-voltage direct current to direct current converter is connected to the battery interface, the power module and the power distribution unit, and the power module is further connected to the high-voltage direct current to direct current converter control unit;
the power distribution unit is connected to the compressor and the heater, and is further connected to the power distribution control unit;
the compressor is connected to the compressor control unit, and the heater is connected to the heater control unit.

In some implementations, the power module includes a drive board, a direct current to direct current converter, a vehicle-mounted charger and an inverter, and the power module control unit includes a direct current to direct current converter control unit, a vehicle-mounted charger control unit and an inverter control unit; the high-voltage component is connected to the direct current to direct current converter, the inverter and the vehicle-mounted charger, and the inverter is connected to the motor interface; the direct current to direct current converter is connected to the direct current to direct current converter control unit, and the vehicle-mounted charger is connected to the vehicle-mounted charger control unit; the drive board is connected to the inverter and the inverter control unit.

In some implementations, the high-voltage control module is further provided with a charging interface and/or a low-voltage battery connection interface;
the vehicle-mounted charger is connected to the charging interface;
the direct current to direct current converter is connected to the low-voltage battery connection interface, and is further connected to a low-voltage battery of an electric vehicle via the low-voltage battery connection interface.

In some implementations, the power module further comprises a filter through which the high-voltage component is connected to the direct current to direct current converter and the inverter.

In some implementations, the high-voltage control module is further provided with a communication interface;
the integrated control chip is connected to the communication interface.

In some implementations, the high-voltage control module is further provided with a motor signal interface;
the integrated control chip is connected to the motor signal interface, and is further connected to a motor detection sensor via the motor signal interface.

According to a second aspect of the present application, there is provided an electric vehicle including the high-voltage system of the electric vehicle described above.

In summary, the high-voltage system of the electric vehicle and the electric vehicle provided by the present application have at least following beneficial effects:
by adopting the high-voltage control module disposed in the integration area and providing with the unified external battery interface and the unified external motor interface, the high-voltage battery is connected via a unified external battery interface, and the motor is connected via a unified external motor interface, so that the same external connection circuitry is shared, the wiring is simplified, the physical integration is realized, the integration degree is improved, and consequently the cost is reduced.

### BRIEF DESCRIPTION OF THE DRAWINGS

In order to more clearly illustrate the technical solutions of specific implementations of the present application, drawings needed for the specific implementations are briefly introduced below with reference to accompanying drawings, and obviously, the accompanying drawings described below are some implementations of the present application, based on the accompanying drawings, other accompanying drawings or solutions can be obtained by those having ordinary skills in the art without making inventive efforts.
Fig. 1 illustrates a block diagram of a high-voltage system of an electric vehicle provided in an embodiment of the present application;
Fig. 2 illustrates a block diagram of a high-voltage system of an electric vehicle provided in another embodiment of the present application.

### DETAILED DESCRIPTION OF EMBODIMENTS

In the description of the present application, it should be understood that terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and other descriptions indicating orientation or positional relationships, unless otherwise specified, are to be understood as based on the orientation or positional relationships shown in the accompanying drawings, and are merely for convenience of describing the present application and simplifying description, and do not indicate or imply that the device or element referred to must have a specific orientation, be constructed and operated in a specific orientation, and thus should not be construed as limiting the present application.

Furthermore, features described with "first", "second" are used merely for descriptive purposes and should not be interpreted as indicating or implying relative importance or implicitly specifying a number of the technical features described. Features defined with "first", "second", or similar may explicitly or implicitly include at least one such defined feature. Descriptions such as "a plurality of" generally imply at least two, such as two, three, etc., unless otherwise explicitly and specifically defined.

In the present application, unless otherwise explicitly defined or limited, terms such as "mounted", "connected", "coupled" or "fixed" should be understood in a broad sense. For example, they may refer to a fixed connection, a detachable connection, or integration; they may be a mechanical connection or an electrical connection; they may be a direct connection or an indirect connection through an intermediate medium, they may be internal communication between two components or an interactive relationship between two components. For those skilled in the art, the specific meanings of the above terms in the present application can be understood based on the particular context.

In the description of the present specification, terms such as "an embodiment", "some embodiments", "example", "specific example" or "some examples" indicate that the specific features, structures, materials, or characteristics described with reference to the embodiment or example are included in at least one embodiment or example of the present application. In the description, illustrative descriptions of the above terms are not necessarily directed to the same embodiment or example. Moreover, the specific features, structures, materials, or characteristics described may be appropriately combined in any one or more embodiments or examples. Furthermore, those skilled in the art may combine and integrate different embodiments or examples described herein, as well as features from different embodiments or examples, without conflicting with each other.

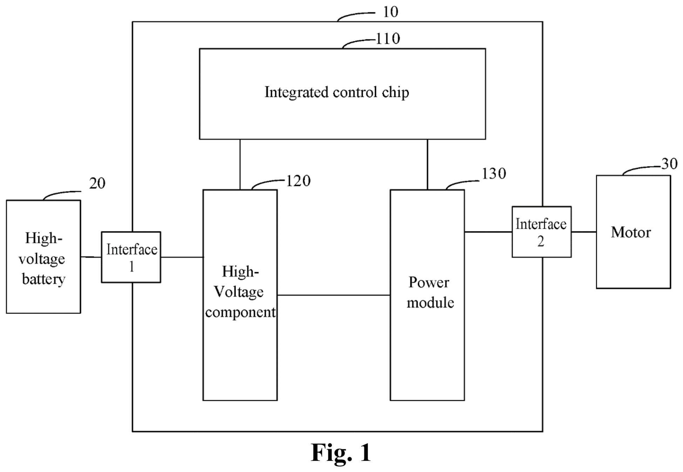

In an embodiment of the present application, there is provided a high-voltage system of an electric vehicle, referring to Fig. 1, the high-voltage system of the electric vehicle includes a high-voltage battery 20, a motor 30 and a high-voltage control module 10 disposed in an integration area, the high-voltage control module 10 is provided with a unified external battery interface and a unified external motor interface, for example, in Fig. 1, an interface 1 represents the battery interface, an interface 2 represents the motor interface. The battery interface (interface 1) is configured to connect to the high-voltage battery 20, the motor interface (interface 2) is configured to connect to the motor 30.

The integration area refers to an area of compact space, such as an area of a circuit board or an area of an electrical framework. The high-voltage control module 10 includes a plurality of high-voltage functional components of the electric vehicle, the high-voltage control module 10 disposed with the integration area means that the high-voltage functional components included in the high-voltage control module 10 are disposed in the same integration area. Specifically, the high-voltage functional components included in the high-voltage control module 10 are connected to the high-voltage battery 20 by the unified battery interface and to the motor 30 by the unified motor interface.

In the high-voltage system of the electric vehicle, by adopting the high-voltage control module 10 disposed in the integration area, the high-voltage functional components included in the high-voltage control module 10 are disposed in the same integration area, and the high-voltage functional components included in the high-voltage control module 10 are connected to the high-voltage battery 20 via the unified external battery interface, and are further connected to the motor 30 via the unified external motor interface, so that the same external connection circuitry is shared, the wiring is simplified, the physical integration is realized, the integration degree is improved, and consequently the cost is reduced.

Referring to Fig. 1, the high-voltage control module 10 may include an integrated control chip 110, a high-voltage component 120 and a power module 130 disposed in the integration area. The integrated control chip 110 is a single chip that integrates control functions of the high-voltage component 120 and control functions of the power module 130.

The high-voltage component 120 is connected to the power module 130, the battery interface, and the integrated control chip 110. Specifically, the high-voltage component 120 is connected to the high-voltage battery 20 of the electric vehicle via the battery interface, and processes a voltage output from the high-voltage battery 20 and then output to the power module 130. The high-voltage component 120 receives a control instruction sent by the integrated control chip 110 and operates in response to the control instruction.

The power module 130 is connected to the motor interface and the integrated control chip 110. Specifically, the power module 130 is connected to the motor 30 of the electric vehicle via the motor interface, and processes an input voltage and then output to the motor 30, so as to drive the motor 30. The power module 130 receives a control instruction sent by the integrated control chip 110 and operates in response to the control instruction.

By integrating the control functions of the high-voltage component 120 and the control functions of the power module 130 into a single integrated control chip 110, the integrated control chip 110 sends the control instruction to the high-voltage component 120 and the power module 130, so as to achieve control integration and reduce use of control chips and control circuitry. Furthermore, by disposing the integrated control chip 110, the high-voltage component 120, and the power module 130 in the same integration area, they can be connected to the high-voltage battery 20 and the motor 30 via a unified external connection interface, so as to share the same external connection circuitry and achieve physical integration. In this way, through two aspects of the control integration and the physical integration, the integration is improved, chip usage is reduced, the wiring is simplified, and consequently the cost is reduced.

In some embodiments, the integrated control chip 110 may be a microcontroller unit (MCU) chip. By adopting the single MCU chip, the control functions of the high-voltage component 120 and the control functions of the power module 130 are integrated, and compared with adopting independent chips for each control function, chip usage can be reduced.

In some embodiments, the integrated control chip 110 includes a high-voltage component control unit and a power module control unit.

The high-voltage component control unit is connected to the high-voltage component 120 and is configured to send a control instruction to the high-voltage component 120 to control operation of the high-voltage component 120. The power module control unit is connected to the power module 130 and is configured to send a control instruction to the power module 130 to control operation of the power module 130.

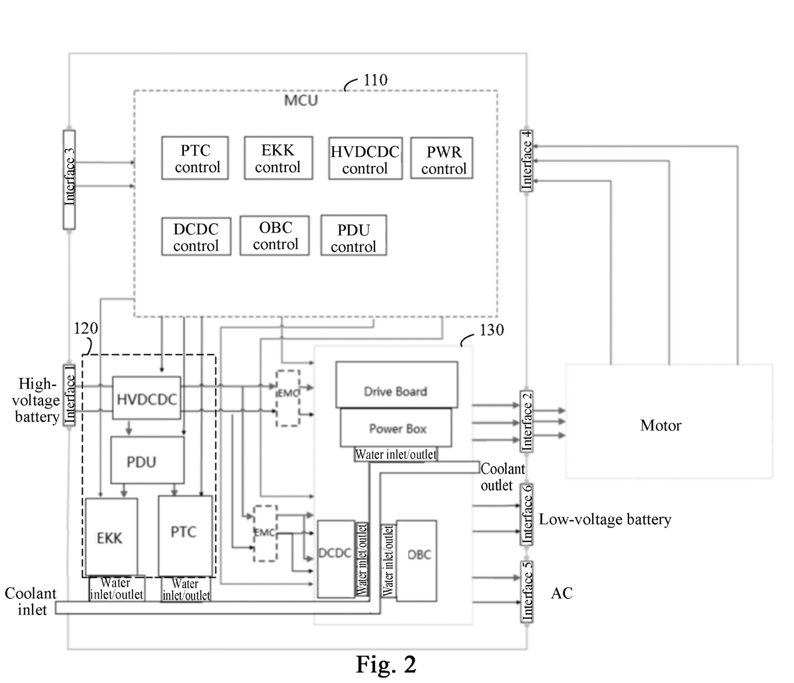

In some embodiments, the high-voltage control module 10 may further be provided with other connection interfaces, such as a communication interface, as shown in an interface 3 in Fig. 2. The integrated control chip 110 is connected to the communication interface and can communicate with external devices, such as a low-voltage system, via the communication interface. Specifically, control units to be communicated in the integrated control chip 110 can share the communication interface. By providing the communication interface, it facilitates communication between the integrated control chip 110 in the high-voltage control module 10 and external devices.

In some embodiments, the high-voltage control module 10 may further be provided with other connection interfaces, such as a motor signal interface, as shown in an interface 4 in Fig. 2. The integrated control chip 110 is connected to the motor signal interface. The motor signal interface is connected to a motor detection sensor mounted on the motor. Therefore, the integrated control chip 110 is connected to the motor detection sensor via the motor signal interface to receive a signal sent from the motor detection sensor. For example, the motor detection sensor may include a motor position sensor and a motor temperature sensor, the integrated control chip 110 may receive a motor position signal sent from the motor position sensor and a motor temperature signal sent from the motor temperature sensor via the motor signal interface. Specifically, the integrated control chip 110 may further include a motor control unit connected to the motor signal interface. By providing the motor signal interface, the integrated control chip 110 can conveniently receive motor detection signals to perform control.

In some embodiments, referring to Fig. 2, the high-voltage component 120 includes a HVDCDC converter, and further includes at least one of a PDU, a compressor (EKK, short for Elektrischer Klimakompressor in German), or a positive temperature coefficient (PTC) heater; the high-voltage component control unit includes a HVDCDC converter control unit, and correspondingly includes at least one of a PDU control unit, an EKK control unit or a PTC heater control unit.

The HVDCDC converter is connected to the battery interface, the power module 120 and the PDU, the HVDCDC converter performs voltage conversion on the high-voltage DC power output from the high-voltage battery 20 connected to the battery interface and outputs DC power to the power module 130 and the PDU. Furthermore, the HVDCDC converter is further connected to the HVDCDC converter control unit to receive a control instruction sent from the HVDCDC converter control unit to operate.

The PDU is connected to the compressor (EKK), the PTC heater, and the PDU control unit. The PDU control unit sends a control instruction to the PDU to control operation of the PDU; the PDU distributes voltage to the compressor (EKK) and the PTC heater.

The compressor (EKK) is connected to the EKK control unit, and the PTC heater is connected to the PTC heater control unit. The EKK control unit sends a control instruction to the compressor (EKK) to control operation of the compressor (EKK); the PTC heater control unit sends a control instruction to the PTC heater to control operation of the PTC heater.

By integrating the control units corresponding to each high-voltage component into the single integrated control chip 110, control integration of the high-voltage components is achieved, and compared with adopting independent control chips, chip usage can be reduced, and control circuitry can be simplified.

In an embodiment, referring to Fig. 2, the power module 130 includes a drive board, a direct current to direct current (DCDC) converter, an OBC, and an inverter (Power Box), the power module control unit includes a DCDC converter control unit, an OBC control unit, and an inverter (PWR) control unit.

The high-voltage component 120 is connected to the DCDC converter, the inverter (Power Box) and the OBC, and the inverter (Power Box) is connected to the motor interface. Specifically, the HVDCDC converter in the high-voltage component is connected to the DCDC converter, the inverter (Power Box) and the OBC; a voltage output from the HVDCDC converter is processed by the DCDC converter to output low-voltage DC power for the low-voltage components; the voltage output from the HVDCDC converter is converted from DC to alternating current (AC) via the inverter (Power Box), then output to the motor 30 via the motor interface.

The DCDC converter is connected to the DCDC converter control unit to operate according to an instruction sent by the DCDC converter control unit; the OBC is connected to the OBC control unit to operate according to an instruction sent by the OBC control unit. The drive board is connected to the inverter (Power Box) and the inverter control unit, and configured to drive the inverter (Power Box) operate according to an instruction output by the inverter control unit.

By integrating control units corresponding to the DCDC converter, the OBC and the inverter (Power Box) into the single integrated control chip 110, control integration is achieved, and compared with adopting independent control chips, chip usage can be reduced, and control circuitry can be simplified.

In some embodiments, as shown in Fig. 2, the compressor (EKK), the PTC heater, the DCDC converter, the OBC and the inverter (Power Box) share one cooling channel, thereby reducing reuse of cooling channels.

In some embodiments, the high-voltage control module 10 is further provided with a charging interface, for example, an interface 5 in Fig. 2 is the charging interface; the OBC is connected to the charging interface. Specifically, the OBC is connected to an AC charger via the charging interface, the AC charger inputs AC power to the OBC, the OBC converts the AC power to DC power to charge the high-voltage battery via the HVDCDC converter.

In some embodiments, the high-voltage control module 10 further includes a low-voltage battery connection interface, for example, an interface 6 in Fig. 2 is the low-voltage battery connection interface; the DCDC converter is connected to the low-voltage battery connection interface and is further connected to the low-voltage battery of the electric vehicle via the low-voltage battery connection interface. Specifically, the DCDC converter can convert high-voltage DC output from the HVDCDC converter into low-voltage DC, and supply power to the low-voltage battery via the low-voltage battery connection interface.

In some embodiments, the power module 130 further includes a filter, the high-voltage component 120 is connected to the DCDC converter and the inverter (Power Box) via the filter. By filtering voltage, electromagnetic interference is eliminated, safety of system operation is enhanced.

Specifically, the filter may be Electromagnetic Compatibility (EMC) filters, as shown in Fig. 2, the HVDCDC converter in the high-voltage components 120 is connected to the inverter (Power Box) via a first filter, and is connected to the DCDC converter via a second filter.

The present application further provides an electric vehicle including the high-voltage system of the electric vehicle described above.

Each technical feature described above can be combined arbitrarily. Although not all possible combinations of these technical features have been described, any combination of these technical features should be considered as being covered by the description, provided that such combination does not involve conflicts.

Finally, it should be noted that the above embodiments are only intended to illustrate the technical solutions of the present application and not to limit the present application.

## Claims

1. A high-voltage system of an electric vehicle, comprising: a high-voltage battery (20), a motor (30) and a high-voltage control module (10) disposed in an integration area, wherein the high-voltage control module (10) is provided with a unified external battery interface and a unified external motor interface;
wherein the battery interface is configured to connect to the high-voltage battery (20), and the motor interface is configured to connect to the motor (30).

2. The high-voltage system of the electric vehicle according to claim 1, wherein the high-voltage control module (10) comprises: an integrated control chip (110), a high-voltage component (120) and a power module (130), disposed in the integration area;
wherein the high-voltage component (120) is connected to the power module (130), the battery interface and the integrated control chip (110), the high-voltage component (120) is further connected to the high-voltage battery (20) via the battery interface, and the high-voltage component (120) receives a control instruction sent by the integrated control chip (110); and
wherein the power module (130) is connected to the motor interface and the integrated control chip (110), the power module (130) is further connected to the motor (30) via the motor interface, and the power module (130) receives a control instruction sent by the integrated control chip (110).

3. The high-voltage system of the electric vehicle according to claim 2, wherein the integrated control chip (110) comprises a high-voltage component control unit and a power module control unit;
wherein the high-voltage component control unit is connected to the high-voltage component (120), and the power module control unit is connected to the power module (130).

4. The high-voltage system of the electric vehicle according to claim 3, wherein the high-voltage component (120) comprises a high-voltage DCDC converter, and further comprises at least one of a power distribution unit, a compressor, or a heater; and the high-voltage component control unit comprises a high-voltage DCDC converter control unit and correspondingly comprises at least one of a power distribution control unit, a compressor control unit, or a heater control unit;
wherein the high-voltage DCDC converter is connected to the battery interface, the power module (130), the power distribution unit, and the high-voltage DCDC converter control unit;
wherein the power distribution unit is connected to the compressor, the heater, and the power distribution control unit; and
wherein the compressor is connected to the compressor control unit, and the heater is connected to the heater control unit.

5. The high-voltage system of the electric vehicle according to any of the claims 3 or 4, wherein the power module (130) comprises a drive board, a DCDC converter, a vehicle-mounted charger, and an inverter, and the power module control unit comprises a DCDC converter control unit, a vehicle-mounted charger control unit, and an inverter control unit; and
the high-voltage component is connected to the DCDC converter, the inverter and the vehicle-mounted charger, and the inverter is connected to the motor interface; the DCDC converter is connected to the DCDC converter control unit, and the vehicle-mounted charger is connected to the vehicle-mounted charger control unit; and the drive board is connected to the inverter and the inverter control unit.

6. The high-voltage system of the electric vehicle according to claim 5, wherein the high-voltage control module (10) is further provided with a charging interface and/or a low-voltage battery connection interface;
wherein the vehicle-mounted charger is connected to the charging interface; and
wherein the DCDC converter is connected to the low-voltage battery connection interface, and the DCDC converter is further connected to a low-voltage battery of an electric vehicle via the low-voltage battery connection interface.

7. The high-voltage system of the electric vehicle according to any of the claims 5 or 6, wherein the power module (130) further comprises a filter through which the high-voltage component (120) is connected to the DCDC converter and the inverter.

8. The high-voltage system of the electric vehicle according to any of the claims 2 to 7, wherein the high-voltage control module (10) is further provided with a communication interface; and
wherein the integrated control chip (110) is connected to the communication interface.

9. The high-voltage system of the electric vehicle according to any of the claims 2 to 8, wherein the high-voltage control module (10) is further provided with a motor signal interface; and
wherein the integrated control chip (110) is connected to the motor signal interface, and the integrated control chip (110) is further connected to a motor detection sensor via the motor signal interface.

10. An electric vehicle comprising the high-voltage system of the electric vehicle according to any of claims 1 to 9.
